# EUROPÄISCHE PATENTSCHRIFT

(11) **EP 3 753 800 B1**
(45) Veröffentlichungstag und Bekanntmachung des Hinweises auf die Patenterteilung: **11.10.2023**
(21) Anmeldenummer: 20176988.2
(22) Anmeldetag: 28.05.2020
(51) Int. Cl.: G06Q 20/42, B61L 7/08, B61L 19/06, G06Q 20/32

(54) **EINGABEVERFAHREN FÜR SICHERHEITSKRITISCHE BEDIENKOMMANDOS UND BEDIENSYSTEM**
INPUT METHOD FOR SAFETY-CRITICAL CONTROL COMMANDS AND CONTROL SYSTEM
PROCÉDÉ D'ENTRÉE POUR COMMANDES D'EXPLOITATION CRITIQUES EN TERMES DE SÉCURITÉ ET SYSTÈME D'EXPLOITATION

(30) Priorität: 19.06.2019 DE 102019208924
(43) Veröffentlichungstag der Anmeldung: 23.12.2020
(73) Patentinhaber: Siemens Mobility GmbH, 81739 München (DE)
(72) Erfinder: Seidler, Gerald, 38302 Wolfenbüttel (DE)
(74) Vertreter: Siemens Patent Attorneys

(56) Entgegenhaltungen:
- DE-A1- 4 107 639
- DE-A1-102014 201 551

## Beschreibung

Es wird ein Eingabeverfahren für sicherheitskritische Bedienkommandos, insbesondere in einer Eisenbahnanlage, angegeben. Darüber hinaus wird ein Bediensystem für ein solches Eingabeverfahren angegeben.

Die Druckschrift WO 2014/033001 A2 betrifft eine Vorortbedienung einer Komponente einer Eisenbahngleisanlage.

Die Druckschrift DE 41 07 639 A1 offenbart ein Verfahren zur Eingabe sicherheitskritischer Bedienkommandos in einer Eisenbahnanlage.

Eine zu lösende Aufgabe liegt darin, ein Verfahren anzugeben, mit dem sicher Bedienkommandos erteilt werden können. Eine weitere zu lösende Aufgabe liegt darin, ein Bediensystem für ein solches Verfahren anzugeben.

Diese Aufgabe wird erfindungsgemäß durch ein Verfahren mit den Merkmalen des Anspruchs 1 gelöst. Bevorzugte Weiterbildungen sind Gegenstand der abhängigen Ansprüche

Die Aufgabe wird weiterhin erfindungsgemäß gelöst durch ein Bediensystem nach Anspruch 9.

Bei der Ausführung bestimmter Operationen insbesondere an einer Eisenbahnanlage muss ein erhöhtes Sicherheitsniveau erreicht werden, um Gefährdungen für Anlagen und Personen zu verhindern. Bei diesen Operationen handelt es sich um sogenannte sicherheitskritische Bedienungen, bei denen zum Beispiel die Sicherheit eines Stellwerks teilweise umgangen wird.

Es gibt Verfahren, bei denen ein gewisses Sicherheitsniveau in der verwendeten Hardware und Software erreicht werden muss. So muss bei manchen Verfahren ein Bediener des Systems ein Kommando mehrfach bestätigen, ob er tatsächlich die gewünschte Operation ausführen möchte. Dies führt in der Regel dazu, dass das verwendete Bediensystem insgesamt ein erhöhtes Sicherheitsniveau erreichen muss, obwohl die sicherheitsrelevanten Bedienungen nur einen geringen Anteil an allen durchgeführten Bedienungen haben.

Durch die Verwendung unterschiedlicher, aber handelsüblicher Hardware bei einem hier beschriebenen Verfahren für einerseits die Eingabe einer sicherheitsrelevanten Operation und andererseits für die Kommandorichtung, sowie durch den Einsatz von heute allgemein verfügbarer Verschlüsselungstechnik, wird der Aufwand für den Einsatz diversitärer Hardware und Software verringert. Damit soll für das Gesamtsystem ein gleich hohes Sicherheitsniveau wie bei anderen Verfahren erreicht werden, obwohl die einzelnen Komponenten des Systems einfacher zu erstellen sind.

Insbesondere können an dem Bedienplatz vergleichsweise einfach Modifikationen ohne ein weiteres amtliches Zulassungsverfahren vorgenommen werden, da die Sicherheit des Gesamtsystems durch die Kombination aus Systemkomponente + Bedienplatz + Empfangsgerät gewährleistet werden kann.

Das hier beschriebene Verfahren bezieht sich somit auf ein Bediensystem, mit dem an einer sicherheitsrelevanten Anlage, wie einem Stellwerk oder einer anderen Bahnbetriebsanlage, eine sicherheitsrelevante Bedienung durchgeführt werden kann. Das Bediensystem umfasst besonders bevorzugt folgende Teile oder besteht aus den folgenden Teilen:
- der Systemkomponente oder mehreren der Systemkomponenten, wobei die mindestens eine Systemkomponente bevorzugt ein Teil einer Bahnanlage ist, beispielsweise ein Stellwerk oder ein Stellwerksteil,
- dem Bedienplatz, der an die Systemkomponente, also insbesondere an das Stellwerk, angeschlossen ist und der es einem Bediener ermöglicht, Bedienungen der Systemkomponente durchzuführen und bevorzugt auch die Zustände der Systemkomponente auf einem Anzeigegerät, wie einem Monitor, zu betrachten, und
- dem Empfangsgerät, das bevorzugt ein Smartphone ist, das beispielsweise über eine Kamera verfügt, und das so mit der mindestens einen Systemkomponente verbunden ist, dass es Bedienkommandos an die mindestens eine Systemkomponente senden kann. Das Empfangsgerät kann besonders bevorzugt keine Daten direkt von der Systemkomponente empfangen.

Bei dem zumindest einen sicherheitskritischen Bedienkommando handelt es sich insbesondere um ein Kommando, das einen Zustand einer Betriebsanlage, wie einer Eisenbahnanlage, ändert. Alternativ zu Bahnanlagen kann das hier beschriebene Verfahren auch für andere Verkehrsanlagen oder Transportanlagen mit sicherheitskritischen, anzusteuernden Komponenten verwendet werden. Weiterhin kann das hier beschriebene Verfahren zur Ansteuerung insbesondere von Prozesszuständen in Anlagen wie Chemiereaktoren, Kraftwerken, Fabriken und/oder Logistikkomplexen herangezogen werden.

Das Bedienkommando wird bevorzugt durch einen Bediener eingegeben, beispielsweise manuell über Schalter, Schieber, eine Computermouse oder Taster, über eine Tastatur oder über einen Touchscreen, oder auch mittels einer Spracheingabe. Das heißt, bei der Eingabe des Bedienkommandos treten der Bediener und der Bedienplatz bevorzugt in unmittelbare Wechselwirkung.

Bei dem Bedienplatz handelt es sich erfindungsgemäß um eine ortsfeste Komponente, wie beispielsweise ein Bedienpult. Erfindungsgemäß ist auch die Systemkomponente ortsfest.

Die in der Systemkomponente erzeugte verschlüsselte Systemantwort ist so verschlüsselt, dass die Systemantwort vom Bedienplatz selbst nicht entschlüsselt werden kann. Das heißt, der Bedienplatz kann als grauer Kommunikationskanal zwischen der Systemkomponente und dem Empfangsgerät aufgefasst werden, der die Systemantwort zwar empfängt und weiterleitet, allerdings den Inhalt der Systemantwort nicht versteht. Bevorzugt umfasst der Bedienplatz technische Mittel und/oder Software, sodass der Bedienplatz außerstande gesetzt ist, die Systemantwort zu verstehen.

Erfindungsgemäß ist das Empfangsgerät ein Mobiltelefon, ein Smartphone, ein Tablet, ein Laptop, eine Smartwatch, eine Webcam in Verbindung mit einem weiteren Rechner oder ein Funkmeldeempfänger.

Erfindungsgemäß ist das Übermitteln im Schritt E) ein Anzeigen der verschlüsselten Systemantwort an einem Bildschirm des Bedienplatzes, wobei die immer noch verschlüsselte Systemantwort dann vom Bediener mit dem Empfangsgerät abfotografiert wird. Die Systemantwort ist zum Beispiel ein zweidimensionaler Code, wie ein QR-Code, der erst im Empfangsgerät entschlüsselt wird, oder ein anderer maschinenlesbarer Code.

Alternativ zu einem Abfotografieren eines zweidimensionalen Codes kann die Systemantwort auch eine akustische Nachricht sein, insbesondere eine Tonsequenz, die von einem Mikrofon des Empfangsgeräts aufgezeichnet und entschlüsselt wird. Eine solche Tonsequenz kann für das menschliche Gehör hörbar oder auch unhörbar sein. Weiterhin ist es möglich, dass im Schritt E) Kurzstreckenfunk zum Einsatz kommt, zum Beispiel Bluetooth der Klasse 3 oder der Klasse 2. Diese Alternative liegt jedoch außerhalb des durch die unabhängigen Ansprüche definierten Schutzumfangs.

Die Systemantwort ist von der Systemkomponente bevorzugt soweit verschlüsselt, dass der Bedienplatz weiß, wie mit der Systemantwort weiter zu verfahren ist, also dass zum Beispiel der 2D-Code anzuzeigen ist. Darüber hinaus ist der Inhalt der Systemantwort durch den Bedienplatz selbst nicht ermittelbar. Gemäß zumindest einer Ausführungsform ist zwischen den Schritten A) und F) eine zuvor festgelegte maximale Bestätigungszeitspanne einzuhalten. Die maximale Bestätigungszeitspanne liegt zum Beispiel bei 30 s oder weniger oder bei 10 s oder weniger.

Gemäß zumindest einer Ausführungsform kann die Bestätigung des Bedienkommandos nur durch ein zuvor zugelassenes und/oder in der Systemkomponente und/oder im Bedienplatz registriertes Empfangsgerät erfolgen. Damit ist verhinderbar, dass nicht autorisierte Geräte als Empfangsgerät verwendet werden. Es können bevorzugt mehrere verschiedene Empfangsgeräte registriert und damit zur Bestätigung des Bedienkommandos zugelassen werden.

Gemäß zumindest einer Ausführungsform wird im Schritt F) die Bestätigung direkt vom Empfangsgerät an die Systemkomponente übermittelt. Dazu kann die Systemkomponente eine Mobilfunkempfangseinheit aufweisen. Alternativ erfolgt im Schritt F) die Bestätigung direkt vom Empfangsgerät an den Bedienplatz und weiter vom Bedienplatz direkt an die Systemkomponente, sodass keine direkte Kommunikation zwischen dem Empfangsgerät und der Systemkomponente vorgesehen ist.

Gemäß zumindest einer Ausführungsform erfolgt eine Kommunikation zwischen dem Bedienplatz und der Systemkomponente drahtgebunden. Alternativ kann eine drahtlose Verbindung, wie eine Mobilfunkverbindung, vorliegen.

Gemäß zumindest einer Ausführungsform ist die Systemkomponente aus folgender Gruppe ausgewählt: Bahnstellwerk, ECTS-Streckenzentrale (ECTS: European Train Control System), Bahnsignalanlage.

Gemäß zumindest einer Ausführungsform werden die Schritte B), C) und D) vollständig computerimplementiert durchgeführt. Der Schritt F) wird bevorzugt nur teilweise computerimplementiert durchgeführt, sodass alle Teilschritte, bis auf das Bestätigen des Bedienkommandos am Empfangsgerät, computerimplementiert sein können.

Gemäß zumindest einer Ausführungsform erfolgt der Schritt A) vollständig sowie die Schritte E) und F) teilweise durch den Bediener, sodass die Schritte E) und F) nur unter Einflussnahme des Bedieners vollständig durchführbar sind. Dabei können die Aktionen des Bedieners darauf beschränkt sein, das Übermitteln der verschlüsselten Systemantwort vom Bedienplatz an das mobile Empfangsgerät zu initiieren und/oder das Bedienkommando zu bestätigen.

Darüber hinaus wird ein Bediensystem für ein Verfahren, wie oben beschrieben, angegeben. Merkmale des Verfahrens sind daher auch für das Bediensystem offenbart und umgekehrt.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
Figur 1 ein Blockdiagramm eines hier beschriebenen Verfahrens zeigt,
Figur 2 einen Teilschritt eines hier beschriebenen Verfahrens illustriert, und
Figur 3 eine schematische Darstellung eines hier beschriebenen Bediensystems für hier beschriebene Verfahren zeigt.

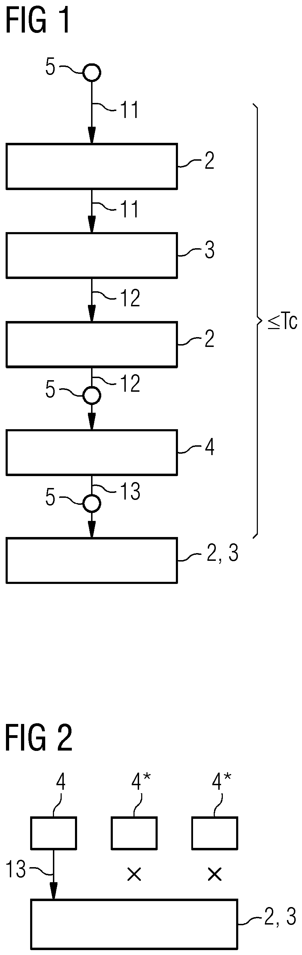

In Figur 1 ist ein Ausführungsbeispiel eines hier beschriebenen Verfahrens als Blockdiagramm dargestellt. In einem ersten Schritt erfolgt durch einen Bediener 5 eine Eingabe eines Bedienkommandos 11 in einen Bedienplatz 2, der zum Beispiel ein Bedienpult ist.

Daraufhin wird vom Bedienplatz 2 das Bedienkommando 11 an eine Systemkomponente 3, insbesondere ein Teil einer Eisenbahnanalage oder auch einer Fertigungsanlage, weitergeleitet. In der Systemkomponente 3 wird der Empfang des Bedienkommandos 11 quittiert und eine verschlüsselte Systemantwort 12 generiert, die zurück an den Bedienplatz 12 gesandt wird. Jedoch kann der Bedienplatz 12 die Systemantwort 12 nicht entschlüsseln und damit deren Inhalt nicht erschließen.

Unter Mitwirkung des Bedieners 5 wird die Systemantwort 12 vom Bedienplatz 2 auf ein Empfangsgerät 4, insbesondere ein Smartphone, übertragen. Im Empfangsgerät 4 wird die Systemantwort 12 entschlüsselt und dem Bediener 5 präsentiert. Daraufhin bestätigt der Bediener 5 die im Bedienkommando 11 enthaltene Anweisung mittels einer Bestätigung 13, die dann direkt an die Systemkomponente 3 oder indirekt über den Bedienplatz 2 an die Systemkomponente 3 übermittelt wird.

Somit ist sicherstellbar, dass die Anweisung an die Systemkomponente 3 nur erfolgt, wenn das Bedienkommando 11 durch den Bediener 5 mittels der Systemantwort 12 nochmals identifiziert und mittels der Bestätigung 13 verifiziert wird.

Optional müssen die Schritte von der Eingabe des Bedienkommandos 11 bis zum Empfangen der Bestätigung 13 oder die Schritte vom Empfangen des Bedienkommandos 11 in der Systemkomponente 3 bis zum Empfangen der Bestätigung 13 in der Systemkomponente 3 innerhalb einer Bestätigungszeitspanne Tc erfolgen. Die Bestätigungszeitspanne Tc beträgt zum Beispiel 10 s oder weniger.

In Figur 2 ist ein Teilschritt des Verfahrens gezeigt, nämlich das Senden der Bestätigung 13 an die Systemkomponente 3 und/oder an den Bedienplatz 2. Dabei kann die Bestätigung 13 nur von dem registrierten Empfangsgerät 4 wirksam versandt werden. Wirksam bedeutet, dass das Senden und/oder Empfangen von Anweisungen über andere, zum betreffenden Zeitpunkt nicht als anweisungsberechtigt registrierte Empfangsgeräte 4*, Bedienplätze oder Systemkomponenten verhindert ist. Die Registrierung erfolgt in der Systemkomponente 3 und/oder im Bedienplatz 2.

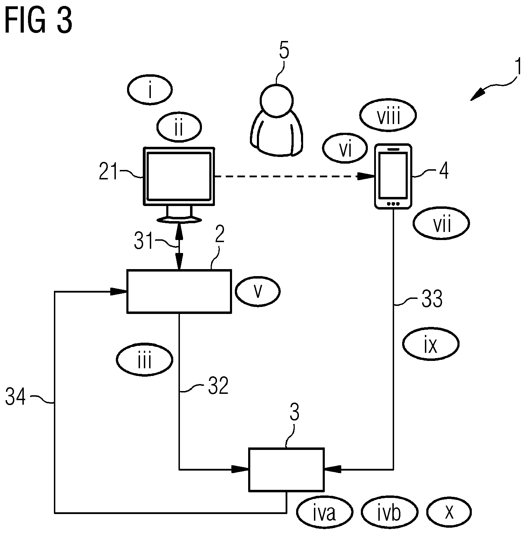

In Figur 3 ist ein Ausführungsbeispiel eines Bediensystems 1 für ein hier beschriebenes Verfahren dargestellt. Bei der Systemkomponente 3 handelt es sich vorliegend insbesondere um ein Stellwerk einer Bahnanlage, als Empfangsgerät 4 wird bevorzugt ein Smartphone verwendet. Das Bediensystem 1 wird anhand der beispielhaften Verfahrensschritte i) bis x) nachfolgend näher erläutert:
i) Der Bediener 5 betrachtet einen Bildschirm 21 des Bedienplatzes 2 und beabsichtigt, eine sicherheitsrelevante Operation mittels des Bedienkommandos 11 durchzuführen. Der Bildschirm 21, zum Beispiel ein Touchscreen, ist bevorzugt mittels eines Eingabe/Ausgabe-Kanals 31 mit einem Bedienplatzrechner des Bedienplatzes 2 verbunden.
ii) Der Bediener 5 klickt dazu zum Beispiel ein "Gleiselement 4711" an und wählt die Bedienung "Achszähler Grundstellung" aus.
iii) Das Bedienkommando 11 geht zusammen mit den notwendigen Daten, zum Beispiel einem Identifikator des zu bedienenden Elementes und einer Sequenznummer, an das Stellwerk 3. Diese Kommunikation erfolgt über einen Kanal 32 für nicht sicherheitsrelevante Bedienungen, wobei über diesen Kanal 32 die vorliegende sicherheitsrelevante Bedienung initiiert wird.
iv) Das Stellwerk 3 als sichere Einheit erkennt, dass es sich um eine sicherheitsrelevante Bedienung handelt. Das Stellwerk 3 speichert die Sequenznummer und führt daraufhin zwei Dinge durch:
   iv a) Das Stellwerk 3 stellt ein Quittungstelegramm zusammen, in dem es seinerseits angibt, was es empfangen hat, also zum Beispiel "Achszähler Grundstellung für Element 4711". Diesen Teil des Telegramms verschlüsselt es mit einem öffentlichen Schlüssel des Smartphones 4.
   iv b) Das Stellwerk 3 sendet diese Daten über einen Informationskanal 34 zusammen mit der Sequenznummer an den Bedienplatz 2 zurück und fordert ihn damit auf, das Verfahren für eine Eingabesicherung durchzuführen. Der Bedienplatz 2 kann zwar den Datenstrom, der die Systemantwort 12 bildet, verarbeiten, versteht aber wegen der Verschlüsselung nicht, um welches Element und welche Bedienung es sich handelt.
v) Aufgrund des Quittungstelegramms mit der Information "sicherheitsrelevante Bedienung" erzeugt der Bedienplatz 2 aus den vom Stellwerk 3 empfangenen, weiterhin verschlüsselten Nutzdaten einen 2D-Code, zum Beispiel einen QR-Code, und zeigt diesen zusammen mit dem betroffenen Element und der Bedienung auf dem Bildschirm 21 an.
vi) Im nächsten Schritt hält der Bediener 5 das Smartphone 4 so vor den Bildschirm 21, dass die Kamera des Smartphones 4 der 2D-Code lesen kann.
vii) Daraufhin liest und decodiert das Smartphone 4 den Inhalt des 2D-Codes, der die Systemantwort 12 repräsentiert. Das Smartphone 4 entschlüsselt die im 2D-Code enthaltenen Daten mit seinem privaten Schlüssel und zeigt diese auf seinem Display an. Damit sieht der Bediener 5 die vom Stellwerk 3 gesendeten Daten auf dem Smartphone 4.
viii) Der Bediener 5 muss nun die Information am Smartphone 4 lesen, prüfen ob es sich um die beabsichtigte sicherheitsrelevante Operation handelt, und dann zum Beispiel per Touch auf das Smartphone 4 freigeben.
ix) Das Smartphone 4 sendet das Kommando in Form der Bestätigung 13 über einen Kanal 33 für eine Sichere Bedienung an das Stellwerk 3.
x) Das Stellwerk 3 prüft die Inhalte und die Sequenznummer und vergleicht sie mit denjenigen Informationen, die es zu Beginn der Bedienung vom Bedienplatz 2 empfangen hat. Ist beides gleich, so wird das Kommando ausgeführt.

Die Aspekte des hier beschriebenen Verfahrens in einer bevorzugten Ausführungsform mit einem hier beschriebenen Bediensystem 1 lassen sich somit wie folgt zusammenfassen:
- Zur Ausführung der sicherheitsrelevanten Bedienung der Systemkomponente 3 sind der Bedienplatz 2 und das Smartphone 4 vorhanden. Durch die Nutzung eines 2D-Codes muss der Bediener 5 aktiv das Smartphone 4 und den Bedienplatz 2 in die gesamte Operation einbinden. Das Smartphone 4 und die Hardware des Bedienplatzes 2 sind im Regelfall Standardkomponenten und benötigen bevorzugt keine besonderen Eigenschaften.
- Der Bediener 5 muss auf zwei unterschiedlichen Anzeigen, nämlich dem Bildschirm 21 des Bedienplatzes 2 und dem Display des Smartphones 4, unabhängig voneinander die sicherheitsrelevante Bedienung eingeben und bestätigen.
- Der Bedienplatz 2 selbst kennt den Inhalt des vom Stellwerk 3 zurückgespiegelten Telegramms 12 nicht, da dieses mit dem öffentlichen Schlüssel des Smartphones 4 verschlüsselt ist.
- Das Smartphone 4 kann keine Daten vom Stellwerk 3 empfangen. Durch den Weg über den Bedienplatz 2 und die explizite Verwendung des verschlüsselten 2D-Codes kann die Durchführung einer gesicherten Bedienung nur vom Bedienplatz 2 und dem Stellwerk 3 aus veranlasst werden.
- Die Diversität der Verarbeitungswege, die zu einer Erhöhung der Sicherheit beiträgt, wird durch unterschiedliche Hardware, also Bedienplatz 2 und Smartphone 4, und Software erreicht.
- Die Anwendung (App) auf dem Smartphone 4 kann generisch ausgelegt werden, da die App über das Entschlüsseln des 2D-Codes, die Bestätigung durch den Bediener 5 und das Senden der Bestätigung 13 hinaus keine weitere Logik zu besitzen braucht. Damit wird ein universeller Einsatz möglich.
- Das beschriebene Verfahren ist nicht abhängig vom Typ des Stellwerks 3 oder auch eines RBCs (RBC: Radio Block Centre).
- Der Bedienplatz 2 ermöglicht erst durch die Kombination mit dem Smartphone 4 die Ausführung sicherheitsrelevanter Bedienungen, benötigt aber bis auf die Generierung des 2D-Codes keine besonderen Funktionalitäten für diese Aufgabe.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt

### Bezugszeichenliste

- 1: Bediensystem
- 2: Bedienplatz
- 21: Bildschirm
- 3: Systemkomponente/Stellwerk
- 4: Empfangsgerät
- 4*: nicht registriertes Empfangsgerät
- 5: Bediener
- 11: Bedienkommando
- 12: Systemantwort
- 13: Bestätigung
- 31: Eingabe/Ausgabe-Kanal
- 32: Kanal für eine nicht sicherheitsrelevante Bedienung
- 33: Kanal für eine sicherheitsrelevante Bedienung
- 34: Informationskanal
- Tc: Bestätigungszeitspanne

## Patentansprüche

1. Verfahren zur Eingabe sicherheitskritischer Bedienkommandos (11) in einer Eisenbahnanlage mit den folgenden Schritten in der angegebenen Reihenfolge:
A) Eingeben des Bedienkommandos (11) in einen Bedienplatz (2),
B) Weiterleiten des Bedienkommandos (11) vom Bedienplatz (2) an eine anzusteuernde Systemkomponente (3),
C) Erzeugen einer zumindest teilweise verschlüsselten Systemantwort (12) in der Systemkomponente (3),
D) Senden der Systemantwort (12) von der Systemkomponente (3) an den Bedienplatz (2),
E) Übermitteln der verschlüsselten Systemantwort (12) vom Bedienplatz (2), der die Systemantwort (12) inhaltlich nicht erfassen kann, unmittelbar an ein mobiles Empfangsgerät (4), und
F) Entschlüsseln der Systemantwort (12) im Empfangsgerät (4) sowie Bestätigen des Bedienkommandos (11) am Empfangsgerät (4) und Senden einer Bestätigung (13) für das Bedienkommando (11) an die Systemkomponente (3),
wobei
- das Empfangsgerät (4) ein Smartphone, ein Mobiltelefon, ein Tablet, ein Laptop, eine Smartwatch, eine Webcam in Verbindung mit einem weiteren Rechner oder ein Funkmeldeempfänger ist,
- der Bedienplatz (2) und die Systemkomponente (3) ortsfest sind,
- das Empfangsgerät (4) keine Daten direkt von der Systemkomponente (3) empfangen kann, und
- das Übermitteln im Schritt E) ein Anzeigen der verschlüsselten Systemantwort (12) an einem Bildschirm (21) des Bedienplatzes (2) und ein Abfotografieren der angezeigten, verschlüsselten Systemantwort (12) mit dem Empfangsgerät (4) umfasst.

2. Verfahren nach einem der vorhergehenden Ansprüche,
wobei
- zwischen den Schritten A) und F) eine zuvor festgelegte maximale Bestätigungszeitspanne (Tc) einzuhalten ist, und
- die Bestätigung (13) nur durch ein zuvor zugelassenes und in der Systemkomponente (3) registriertes Empfangsgerät (4) erfolgen kann.

3. Verfahren nach einem der vorhergehenden Ansprüche,
wobei im Schritt F) die Bestätigung (13) direkt vom Empfangsgerät (4) an die Systemkomponente (3) übermittelt wird.

4. Verfahren nach einem der Ansprüche 1 bis 2,
wobei im Schritt F) die Bestätigung (13) direkt vom Empfangsgerät (4) an den Bedienplatz (2) und weiter vom Bedienplatz (2) direkt an die Systemkomponente (3) übermittelt wird.

5. Verfahren nach einem der vorhergehenden Ansprüche,
wobei
- eine Kommunikation zwischen dem Bedienplatz (2) und der Systemkomponente (3) drahtgebunden oder drahtlos erfolgt, und
- eine Kommunikation zwischen dem Bedienplatz (2) und dem Empfangsgerät (4) kontaktlos, aber in einem Abstand von höchstens 10 m, erfolgt.

6. Verfahren nach einem der vorhergehenden Ansprüche,
wobei die Systemkomponente (3) aus folgender Gruppe ausgewählt ist: Bahnstellwerk, ECTS-Streckenzentrale, Bahnsignalanlage.

7. Verfahren nach einem der vorhergehenden Ansprüche,
wobei
- die Schritte B), C) und D) vollständig sowie der Schritt F) teilweise computerimplementiert durchgeführt werden, und
- der Schritt A) vollständig sowie die Schritte E) und F) teilweise durch einen Bediener (5) erfolgen, sodass die Schritte E) und F) nur unter Einflussnahme des Bedieners (5) durchführbar sind.

8. Verfahren nach einem der vorhergehenden Ansprüche,
wobei
- die Systemantwort (12) bestimmungsgemäß nur durch das Empfangsgerät (4) entschlüsselbar ist, so dass der Bedienplatz (2) die Systemantwort (12) nicht versteht, und
- die Systemantwort (12) ausschließlich mittels des Bedienplatzes (2) an das Empfangsgerät (4) weiterleitbar ist.

9. Bediensystem (1) für ein Verfahren nach einem der vorherigen Ansprüche, umfassend
- den Bedienplatz (11), der dazu eingerichtet ist, das Bedienkommando (11) zu erhalten und an die anzusteuernde Systemkomponente (3) weiterzuleiten sowie die verschlüsselte Systemantwort (12) dem mobilen Empfangsgerät (4) bereitzustellen,
- die Systemkomponente (3), die dazu eingerichtet ist, nach Erhalt des Bedienkommandos (11) die verschlüsselte Systemantwort (12) zu erzeugen und an den Bedienplatz (11) weiterzugeben sowie die Bestätigung (13) zu empfangen, und
- das Empfangsgerät (4), das dazu eingerichtet ist, die verschlüsselte Systemantwort (12) unmittelbar vom Bedienplatz (2) zu erhalten und zu entschlüsseln sowie die Bestätigung (13) für das Bedienkommando (11) an die Systemkomponente (3) zu senden,
wobei
- das Empfangsgerät (4) ein Smartphone, ein Mobiltelefon,
ein Tablet, ein Laptop, eine Smartwatch, eine Webcam in Verbindung mit einem weiteren Rechner oder ein Funkmeldeempfänger ist,
- der Bedienplatz (2) und die Systemkomponente (3) ortsfest sind,
- das Empfangsgerät (4) keine Daten direkt von der Systemkomponente (3) empfangen kann, und
- wobei der Bedienplatz weiterhin dazu ausgebildet ist, die verschlüsselte Systemantwort dem Empfangsgerät dadurch bereit zu stellen, dass die verschlüsselte Systemantwort an einem Bildschirm des Bedienplatzes angezeigt wird, und das Empfangsgerät weiterhin dazu ausgebildet ist,
die verschlüsselte Systemantwort durch Abfotografieren der angezeigten, verschlüsselten Systemantwort von dem Bedienplatz zu erhalten.

## Claims

1. Method for inputting safety-critical control commands (11) in a railway system having the following steps in the specific order:
A) inputting the control command (11) into an operator station (2),
B) forwarding the control command (11) from the operator station (2) to a system component (3) to be activated,
C) generating an at least partially encrypted system response (12) in the system component (3),
D) sending the system response (12) from the system component (3) to the operator station (2),
E) transferring the encrypted system response (12) from the operator station (2), which cannot detect the contents of the system response (12), directly to a mobile receiving device (4) and
F) decrypting the system response (12) in the receiving device (4) and confirming the control command (11) on the receiving device (4) and sending a confirmation (13) for the control command (11) to the system component (3),
wherein
- the receiving device (4) is a smartphone, a mobile telephone, a tablet, a laptop, a smartwatch, a webcam in connection with a further computer or a radio receiver,
- the operator station (2) and the system component (3) are stationary,
- the receiving device (4) cannot receive data directly from the system component (3), and
- the transfer in step E) comprises indicating the encrypted system response (12) on a monitor (21) of the operator station (2) and photographing the indicated, encrypted system response (12) with the receiving device (4).

2. Method according to one of the preceding claims,
wherein
- a previously defined maximum confirmation period (Tc) is to be retained between the steps A) and F), and
- the confirmation (13) can only take place by means of a previously permitted receiving device (4) registered in the system component (3).

3. Method according to one of the preceding claims,
wherein in step F), the confirmation (13) is transferred directly from the receiving device (4) to the system component (3) .

4. Method according to one of claims 1 to 2,
wherein in step F) the confirmation (13) is transferred directly from the receiving device (4) to the operator station (2) and further from the operator station (2) directly to the system component (3).

5. Method according to one of the preceding claims,
wherein
- communication between the operator station (2) and the system component (3) takes place in a wired or wireless manner, and
- communication between the operator station (2) and the receiving device (4) takes place without contact, but at a distance of at most 10 m.

6. Method according to one of the preceding claims,
wherein the system component (3) is selected from the following group: railway signal box, ECTS control centre, railway signalling system.

7. Method according to one of the preceding claims,
wherein
- the steps B), C) and D) are carried out entirely in a computer-implemented manner and step F) is carried out partially in a computer-implemented manner, and
- the step A) is carried out entirely by an operator (5) and steps E) and F) are carried out partially by an operator (5), so that the steps E) and F) can only be implemented under the influence of the operator (5).

8. Method according to one of the preceding claims,
wherein
- the system response (12) can be decrypted as intended only by the receiving device (4) so that the operator station (2) does not understand the system response (12), and
- the system response (12) can be forwarded to the receiving device (4) exclusively by means of the operator station (2).

9. Operator station (1) for a method according to one of the preceding claims, comprising
- the operator station (11), which is designed to receive the control command (11) and to forward the same to the system component (3) to be activated and to provide the encrypted system response (12) to the mobile receiving device (4),
- the system component (3), which is designed to generate the encrypted system response (12) after receiving the control command (11) and to forward the same to the operator station (11) and to receive the confirmation (13), and
- the receiving device (4), which is designed to receive the encrypted system response (12) directly from the operator station (2) and to decrypt the same and to send the confirmation (13) for the control command (11) to the system component (3),
wherein
- the receiving device (4) is a smartphone, a mobile telephone, a tablet, a laptop, a smartwatch, a webcam in conjunction with a further computer or a radio message receiver,
- the operator station (2) and the system component (3) are stationary,
- the receiving device (4) cannot receive data directly from the system component (3), and
- wherein the operator station is further embodied to provide the encrypted system response to the receiving device such that the encrypted system response is indicated on a monitor of the operator station and the receiving device is furthermore embodied to receive the encrypted system response by photographing the indicated, encrypted system response from the operator station.

## Revendications

1. Procédé d'entrée d'instructions (11) d'exploitation critiques du point de vue de la sécurité dans une installation de chemin de fer comprenant les stades suivants dans l'ordre indiqué :
A) Entrée de l'instruction (11) d'exploitation dans un emplacement (2) d'exploitation,
B) Acheminement de l'instruction (11) d'exploitation de l'emplacement (2) d'exploitation à un composant (3) de système à commander,
C) Production dans le composant (3) de système d'une réponse (12) de système chiffrée au moins en partie,
D) Envoi de la réponse (12) de système du composant (3) de système à l'emplacement (2) d'exploitation,
E) Transmission de la réponse (12) de système chiffré de l'emplacement (2) d'exploitation, qui peut ne pas détecter, du point de vue du contenu, la réponse (12) de système, directement à un appareil (4) mobile de réception, et
F) Déchiffrement de la réponse (12) de système dans l'appareil (4) de réception ainsi que confirmation de l'instruction (11) d'exploitation à l'appareil (4) de réception et envoi d'une confirmation (13) de l'instruction (11) d'exploitation au composant (3) de système,
dans lequel
- l'appareil (4) de réception est un téléphone intelligent, un téléphone mobile, une tablette, un ordinateur portable, une montre intelligente, une webcam en liaison avec un autre ordinateur ou un récepteur répondeur radio,
- l'emplacement (2) d'exploitation et le composant (3) de système sont à un emplacement fixe,
- l'appareil (4) de réception ne peut pas recevoir de données directement du composant (3) de système, et
- la transmission au stade E) comprend un affichage de la réponse (12) de système chiffrée sur un écran (21) de l'emplacement (2) d'exploitation et une reproduction photographique par l'appareil (4) de réception de la réponse (12) de système chiffrée affichée.

2. Procédé suivant l'une des revendications précédentes, dans lequel
- entre les stades A) et F), il est observé un laps de temps (Tc) de de confirmation maximum fixé au préalable, et
- la confirmation (13) ne peut s'effectuer que par un appareil (4) de réception autorisé au préalable et enregistré dans le composant (3) de système.

3. Procédé suivant l'une des revendications précédentes, dans lequel dans le stade F), on transmet la confirmation (13) directement de l'appareil (4) de réception au composant (3) de système.

4. Procédé suivant l'une des revendications 1 à 2, dans lequel dans le stade F), on transmet la confirmation (13) directement de l'appareil (4) de réception à l'emplacement (2) d'exploitation et on continue à la transmettre de l'emplacement (2) d'exploitation directement au composant (3) de système.

5. Procédé suivant l'une des revendications précédentes, dans lequel
- une communication entre l'emplacement (2) d'exploitation et le composant (3) de système a lieu par fil ou sans fil, et
- une communication entre l'emplacement (2) d'exploitation et l'appareil (4) de réception s'effectue sans contact mais à une distance de 10 m au plus.

6. Procédé suivant l'une des revendications précédentes, dans lequel le composant (3) de système est sélectionné dans le groupe suivant : Poste d'aiguillage de voie, poste de commande centralisée ECTS, installation de signal de voie.

7. Procédé suivant l'une des revendications précédentes, dans lequel
- on effectue les stades B), C) et D) entièrement ainsi que le stade F) en partie par ordinateur, et
- le stade A) est effectué entièrement ainsi que les stades E) et F) en partie par un opérateur (5) de sorte que les stades E) et F) ne peuvent être effectués que sous l'influence de l'opérateur (5).

8. Procédé suivant l'une des revendications précédentes, dans lequel
- la réponse (12) de système peut, conformément aux prescriptions, être déchiffrée seulement par l'appareil (4) de réception de sorte que l'emplacement (2) d'exploitation ne peut pas comprendre la réponse (12) de système, et
- la réponse (12) de système peut être acheminée à l'appareil (4) de réception exclusivement au moyen de l'emplacement (2) d'exploitation.

9. Système (1) d'exploitation pour un procédé suivant l'une des revendications précédentes, comprenant
- l'emplacement (11) d'exploitation, qui est agencé pour recevoir des instructions (11) d'exploitation et pour les acheminer au composant (3) de système à commander ainsi que pour mettre à disposition de l'appareil (4) mobile de réception la réponse (12) de système chiffrée,
- le composant (3) de système est agencé pour, après réception de l'instruction (11) d'exploitation, produire la réponse (12) de système chiffrée et l'acheminer à l'emplacement (11) d'exploitation ainsi que pour recevoir la confirmation (13), et
- l'appareil (4) de réception est agencé pour recevoir la réponse (12) de système chiffré directement de l'emplacement (2) d'exploitation et pour la déchiffrer ainsi que pour envoyer la confirmation (13) pour l'instruction (11) d'exploitation au composant (3) de système,
dans lequel
- l'appareil (4) de réception est un téléphone intelligent, un téléphone mobile, une tablette, un ordinateur portable, une montre intelligente, une webcam en liaison avec un autre ordinateur ou un récepteur répondeur radio,
- l'emplacement (2) d'exploitation et le composant (3) de système sont à un emplacement fixe,
- l'appareil (4) de réception ne peut pas recevoir de données directement du composant (3) de système, et
- dans lequel l'emplacement d'exploitation est constitué en outre pour mettre à disposition de l'appareil de réception la réponse de système chiffrée par le fait que la réponse de système chiffrée est affichée sur un écran de l'emplacement d'exploitation et par le fait que l'appareil de réception est constitué en outre pour recevoir la réponse de système chiffrée de l'emplacement d'exploitation par reproduction photographique de la réponse de système chiffrée affichée.
